# EUROPEAN PATENT SPECIFICATION

(11) **EP 1 944 226 B1**
(45) Date of publication and mention of the grant of the patent: **06.01.2010**
(21) Application number: 07117123.5
(22) Date of filing: 25.09.2007
(51) Int. Cl.: B62J 17/00, B62J 1/28

(54) **Rear spoiler**
Heckspoiler
Becquet arrière

(30) Priority: 10.01.2007 JP 2007002353
(43) Date of publication of application: 16.07.2008
(73) Proprietor: Honda Access Corp., Nobidome Niiza-shi, Saitama-ken (JP)
(72) Inventor: Yonai, Masato, SAITAMA-KEN Saitama (JP); Kuroda, Kosuke, SAITAMA-KEN Saitama (JP)
(74) Representative: Quinterno, Giuseppe

(56) References cited:
- EP-A- 1 717 137
- JP-A- 5 310 162
- US-A- 4 549 629
- US-A- 4 690 237
- US-A1- 2004 079 561
- US-A1- 2005 046 250

## Description

The present invention relates to a saddle-type vehicle with a rear spoiler of the kind defined in the preamble of claim 1.

JP 05 310162 discloses a saddle-type vehicle of that kind, in particular a scooter type motorcycle, provided on a rear part thereof with a rear spoiler for rectifying air that flows from front to back during traveling.

In the saddle-type vehicle according to said prior document the rear spoiler is fixed on a mounting bracket attached to the rear end portion of the vehicle body frame, behind the seat, and surrounds the rear part of the seat from behind.

According to the foregoing prior art, however, the rear spoiler is provided in such a manner that it is arranged in the immediate vicinity of the rear cover. As result, there has been a concern that the rear spoiler is liable to be susceptible to rectify the air flowing through a vehicle surface such as a rear cover surface.

In view of the above problems it is, therefore, an object of the present invention to provide a saddle-type vehicle having a rear spoiler which can rectify air without being affected by the airflow from a rear cover.

To achieve the above object, according to a first aspect of the present invention there is proposed a saddle-type vehicle of the initially specified kind, characterized by the features defined in claim 1.

The vehicle according to a second aspect of the invention is characterized in that said arm-resting surface is inclined toward a front, and covered with a covering member. According to the aforesaid first aspect, the spoiler section is retained above the seat, thus ensuring the rectifying of air without being influenced by a turbulent flow generated in the vicinity of the surface of the vehicle.

According to the aforesaid second aspect, the feel of the arm-resting surface a passenger may have when resting the passenger's elbow thereon can be improved.
Fig. 1 is a perspective view showing an overall structure of a vehicle in accordance with an embodiment of the present invention.
Fig. 2 is a perspective view showing an overall structure of a rear spoiler in accordance with the embodiment of the present invention.
Fig. 3 is a plan view showing the structure of the rear spoiler in accordance with the embodiment of the present invention.
Fig. 4 is a side view showing the structure of the rear spoiler in accordance with the embodiment of the present invention.
Fig. 5 is a longitudinal section showing the structure of the rear spoiler in accordance with the embodiment of the present invention.
Fig. 6 is a rear view showing the structure of the rear spoiler in accordance with the embodiment of the present invention.
Fig. 7 is a longitudinal section showing a modified example of the rear spoiler in accordance with the embodiment of the present invention.

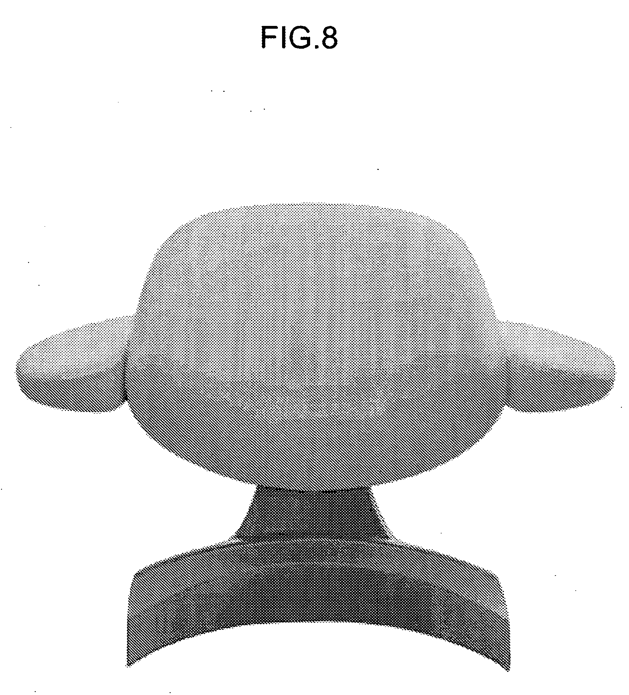

Fig. 8 is a front view showing the rear spoiler in accordance with the embodiment of the present invention.

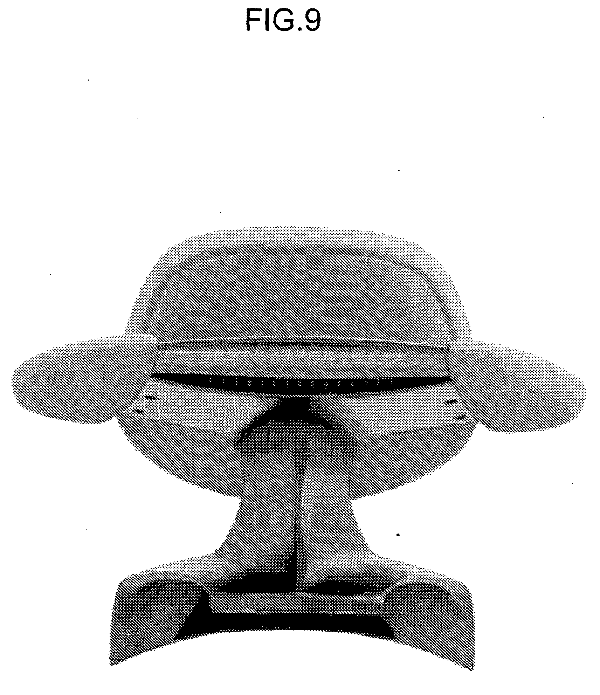

Fig. 9 is a rear view showing the rear spoiler in accordance with the embodiment of the present invention.

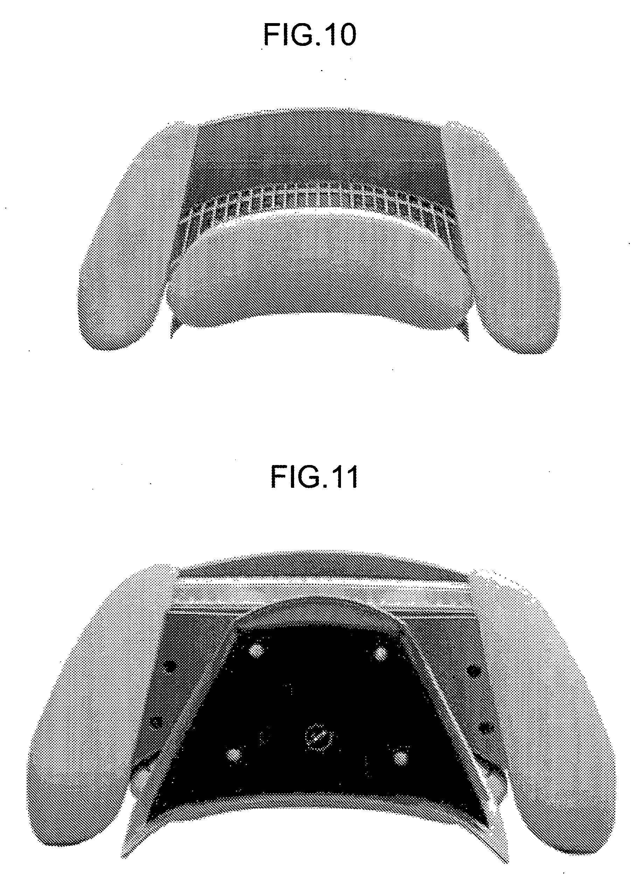

Fig. 10 is a plan view showing the rear spoiler in accordance with the embodiment of the present invention.
Fig. 11 is a bottom plan view showing the rear spoiler in accordance with the embodiment of the present invention.

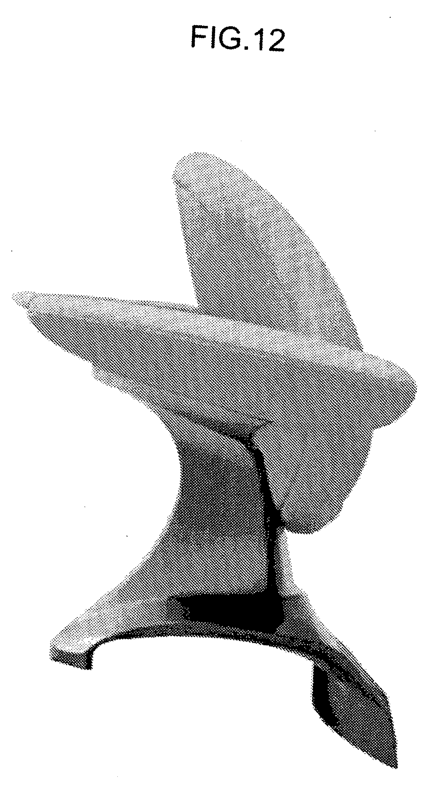

Fig. 12 is a left side view showing the rear spoiler in accordance with the embodiment of the present invention.

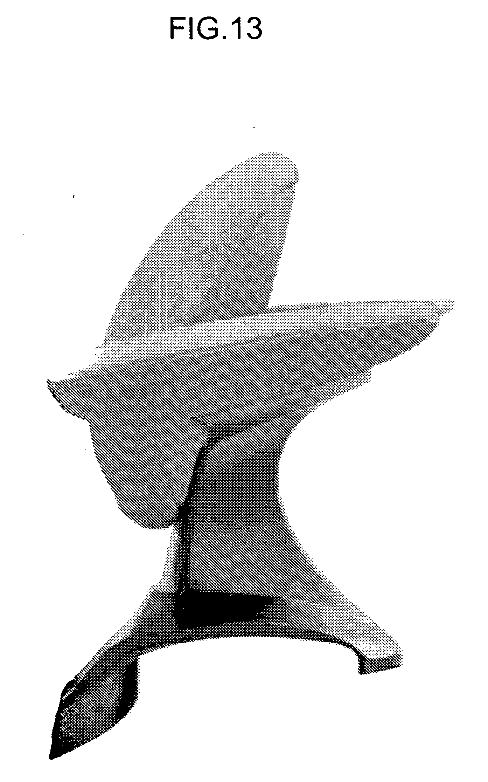

Fig. 13 is a right side view showing the rear spoiler in accordance with the embodiment of the present invention.

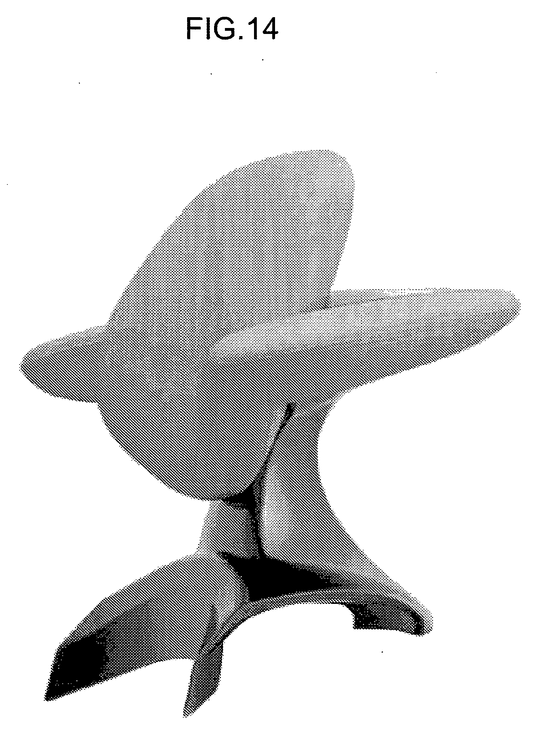

Fig. 14 is a perspective view showing the rear spoiler in accordance with the embodiment of the present invention.

Next is a description of preferred embodiments of the present invention with reference to the attached drawings.

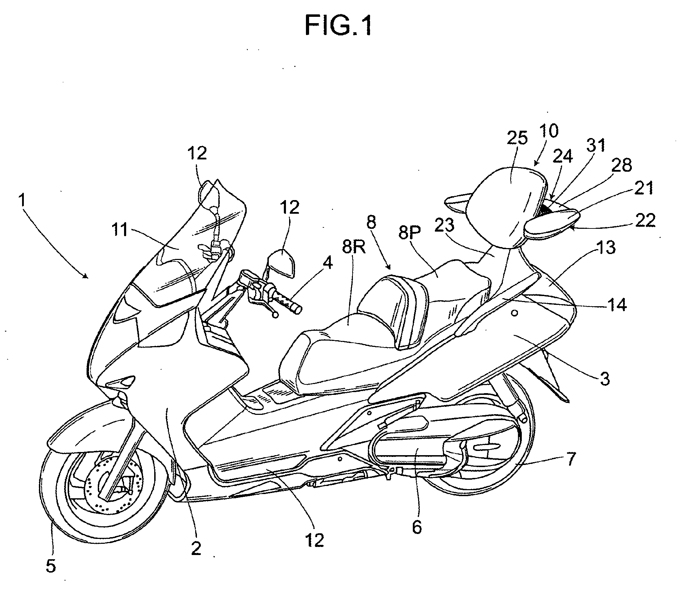

A motor scooter type motorcycle 1 (hereinafter called "vehicle 1") as a saddle-type vehicle shown in Fig. 1 comprises a vehicle frame (not shown), a front cover 2, a rear cover 3, a handle 4, a front wheel 5, a power unit 6, a rear wheel 7, a seat unit 8 and a rear spoiler 10, and it is constituted so that a rider riding on the seat unit 8 may operate it by steering the handle 4.

That is, the vehicle frame is covered with the front cover 2 and the rear cover 3; the front wheel 5 steered by the handle 4 is provided on a front part of the vehicle frame; the power unit 6 supported movably in the vertical direction is provided near a central part; and the rear wheel 7 is integrally fitted to an output shaft of the power unit 6.

A front shield 11 serving as a wind guard for passengers sitting on the seat unit 8 is provided on the front cover 2. Moreover, the handle 4 is provided with a pair of side mirrors 12, protruding in the width direction on right and left sides of the vehicle 1. Above the power unit 6 is provided the seat unit 8 that is mounted to a seat frame (not shown) fixedly attached to the vehicle frame.

The seat unit 8 comprises a rider seat member 8R and a passenger seat member 8P that are arranged in the longitudinal direction. Between the seat unit 8 and a rear side of the front cover 2 are provided a pair of footrests 12 for a rider sitting on the rider seat member 8R to place his/her both legs on, on right and left sides with respect to the traveling direction of the vehicle.

A lamp unit 13 comprising a taillight, a blinker lamp, etc. is fitted to the rear end of the rear cover 3, while a pair of grab rails 14 are provided in the vicinity of the passenger seat member 8P. Accordingly, the grab rails 14 are fixedly arranged on the front side of the rear spoiler 10 and in the vicinity of the surface of the vehicle 1.

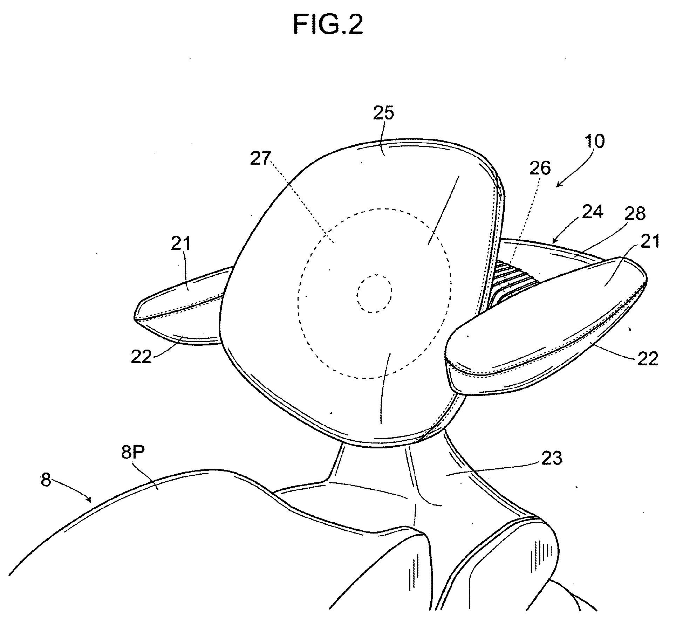

The rear spoiler 10 is fixed to a seat frame at the rear end of the vehicle 1 so that the air flowing through the sides of the vehicle 1 may be rectified during the travel. As shown in Fig. 2, the rear spoiler 10 comprises a spoiler body 24 including: spoiler sections 22 each equipped with an arm-resting surface 21; and a retainer section 23 provided so as to be capable of retaining the spoiler sections 22 above the seat unit 8.

The spoiler body 24 further comprises a backrest 25 for supporting a passenger sitting on the passenger seat member 8P from back. The spoiler body 24 further comprises a sound equipment composed of an amplifier (not shown), speakers 26 and a woofer 27 for use in reproduction of deep bass sound so that music or the like may be provided to the passengers.

The retainer section 23, i.e., the lower section of the spoiler body 24, is constituted of a hollow pillar-shaped member of a single piece structure, extending vertically from a transverse center of the vehicle 1. One end of the retainer section 23 is fixed to the seat frame, while the other end thereof extends up to a wing section 28 or the upper section of the spoiler body 24. The retainer section 23 is formed with a smoothly-contoured surface, and both the ends thereof are gradually expanded like the foot of a mountain, communicating with the rear end of the vehicle 1 and the wing section 28, respectively, while prescribing a constricted portion in the vicinity of the center thereof.

The spoiler sections 22 are provided integrally with the wing section 28. Thus, the retainer section 23 is capable of retaining the spoiler sections 22 above the seat unit 8, at a height approximate to the height of the elbows of the passenger sitting on the passenger seat member 8P.

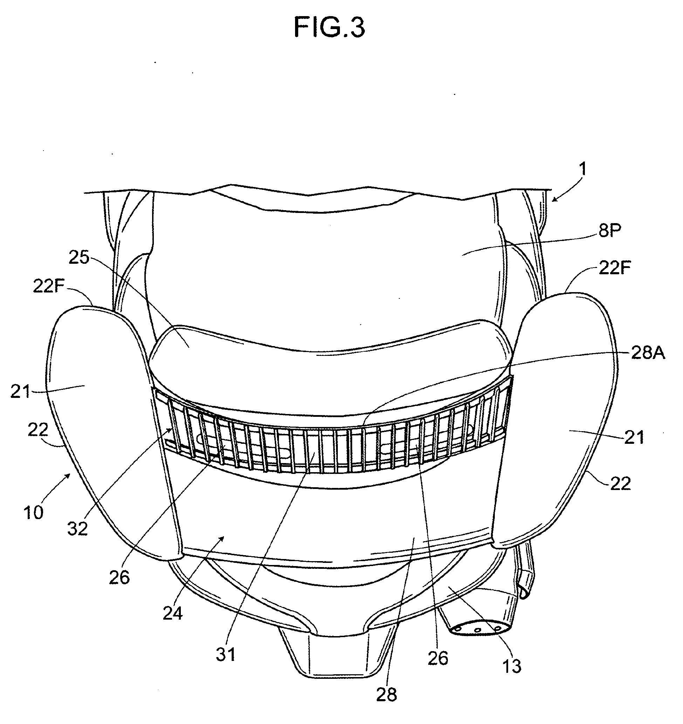

As shown in Fig. 3, the wing section 28 comprises a hollow tabular member elongated in the width direction of the vehicle 1, provided with the backrest 25 in the center thereof and the spoiler section 22 arranged on both ends thereof. The spoiler section 22 is arranged in pairs on right and left sides with the backrest 25 arranged therebetween, having a distal end 22F protruding forward of the backrest 25 toward the front side of the vehicle 1

In a plan view, the wing section 28 is formed with a curved surface 28A which is gently curved concavely relative to the front side of the vehicle 1, while the backrest 25 having a similarly curved surface is allowed to abut to the curved surface 28A. The wing section 28 has an upwardly-directed window 31 for speakers, containing speakers 26 thereinside.

The window 31 for speakers, covered with a guard member 32, is provided adjacent to the curved surface 28A along the entire length of the wing section 28 in a manner surrounding said backrest 25 from behind. Incidentally, the guard member 32 may be configured in various ways, such as those having a surface configured in a mesh or a grid.

Said speakers 26 are disposed apart from each other on the right and left sides of the spoiler body 24, each having an upwardly-directed opening so that music or the like may be transmitted through the guard member 32 to reach above the spoiler body 24. In the present embodiment, the speakers 26 are provided in pairs on right and left sides, each provided in the wing section 28 with a vibrator member thereof being directed substantially upwardly.

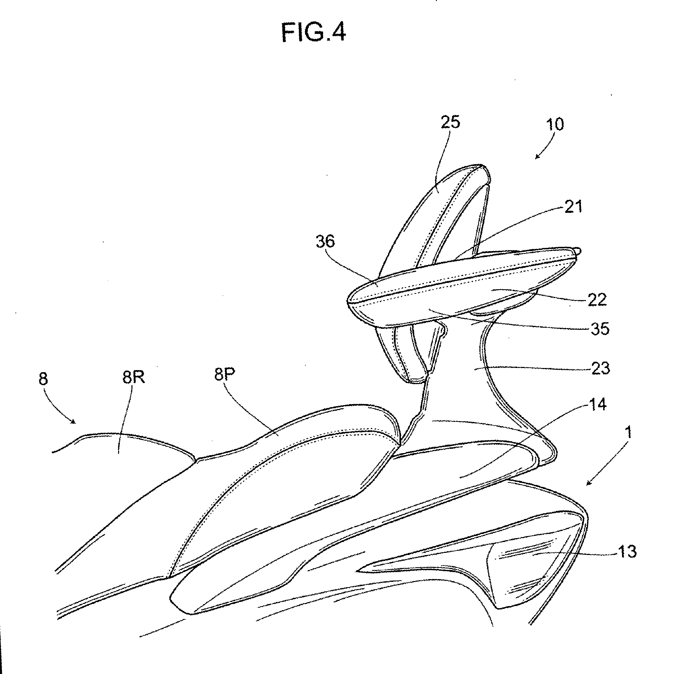

As shown in Fig. 4, each spoiler section 22 is mounted so that it may be inclined downward as it progresses toward the front of the vehicle. Accordingly, in a side view, the spoiler section 22 and the backrest 25 are arranged so that it may be crossed in a manner like a letter X. Moreover, the spoiler section 22 includes a convex part 35 on an undersurface thereof, expanding toward a bottom, defining a comparatively thick portion on the front side of vehicle 1 while a comparatively thin portion on the rear side thereof.

Moreover, the spoiler section 22 includes an arm-resting surface 21 on an upper surface thereof, said arm-resting surface 21 having a flat surface so that the elbow of the passenger sitting on the passenger seat member 8P may be supported therewith. The arm-resting surface 21 is covered with a covering member 36 having cushioning properties. The upper surface of the spoiler section 22, i.e., the arm-resting surface 21, and the undersurface of the spoiler section 22 are covered with the covering member 36 so that it may not be deformed by the wind pressure during the travel, etc. Preferably, the covering member 36 may have a surface which is comfortably soft and less slippery. The covering member 36 of the present embodiment is constituted of artificial leather.

It goes without saying that the covering member 36 that covers a portion of the spoiler sections 22 other than the arm-resting surfaces 21 does not need to have cushioning properties. By constituting the spoiler section 22 in this way, the rear spoiler 10 is allowed to have an air-rectifying function and an arm-resting function.

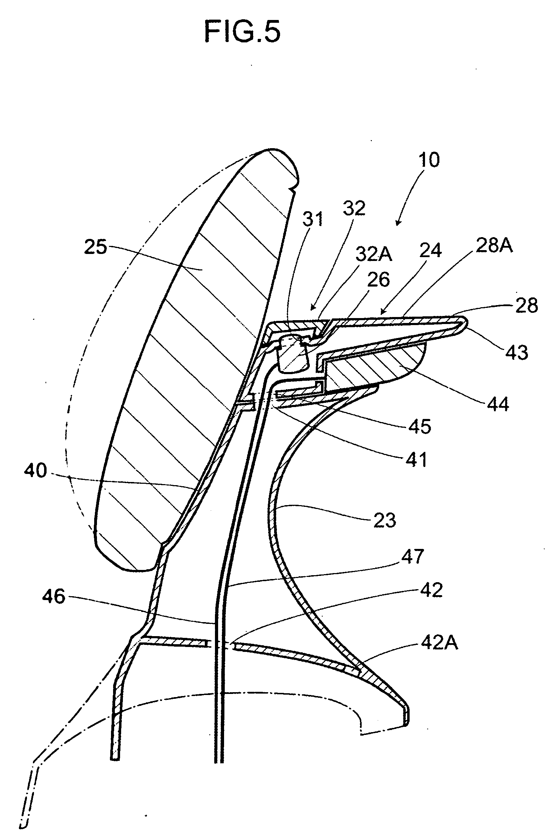

As shown in Fig. 5, the front side of the spoiler body 24 is formed with an inclined surface 40 that inclines toward the rear side of the vehicle 1 as it extends upwards so as to be able to retain the backrest 25 with the same being tilted rearwards. The retainer section 23 is formed with an upper communication hole 41 at a top end, and a lower communication hole 42 at a bottom end. The lower communication hoe 42 is open to the bottom side, communicated with the rear cover 3.

The window 31 for speakers formed in the wing section 28 is provided in a position depressed relative to the upper surface thereof, and the upper end surface 32A of the guard member 32 provided in this window 31 for speakers is formed flush with the upper surface 28A of the wing section 28. The wing section 28 has a rear vane 43 formed by projecting the upper surface 28A toward the rear side of the vehicle 1, and a high mount stop lamp 44 is provided below the rear vane 43 with the same sandwiched between the upper end of the retainer section 23 and the rear vane 43. A penetration hole 45 communicating with the upper communication hole 41 provided on the upper end of the retainer section 23 is provided at a lower end of the wing section 28.

The speakers 26 are each electrically connected to an amplifier installed at the main body side of the vehicle 1 through an electric wire 46 for speaker. Each electric wire 46 for speaker connected to the speaker 26 passes through the penetration hole 45 and the upper communication hole 41, traversing the inside of the spoiler body 24, and is connected to the amplifier through the lower communication hole 42.

The high mount stop lamp 44 is arranged below the rear vane 43 of the wing section 28, in a position retracted from the rear end of the rear vane 43 thereof. The high mount stop lamp 44 comprises, though not illustrated, a group of lamps provided by juxtaposing two or more LEDs, and a lens that covers the lamp group and is directed rearwards of the vehicle 1. The lamp group is electrically connected to a power supply unit (not shown) provided in the main body side of the vehicle 1 via an electric wire 47 for lamp. Like the electric wires 46 for speakers, the electric wire 47 for lamp traverses the spoiler body 24, and is connected to the power supply unit through the lower communication hole 42.
A drain opening 42A is formed in the lower part of the spoiler body 24. The drain opening 42A is vertically formed in the lowermost position on the bottom surface of the spoiler body 24 so that the water taken in from the window 31 for speakers can be discharged from the drain opening 42A to the exterior.

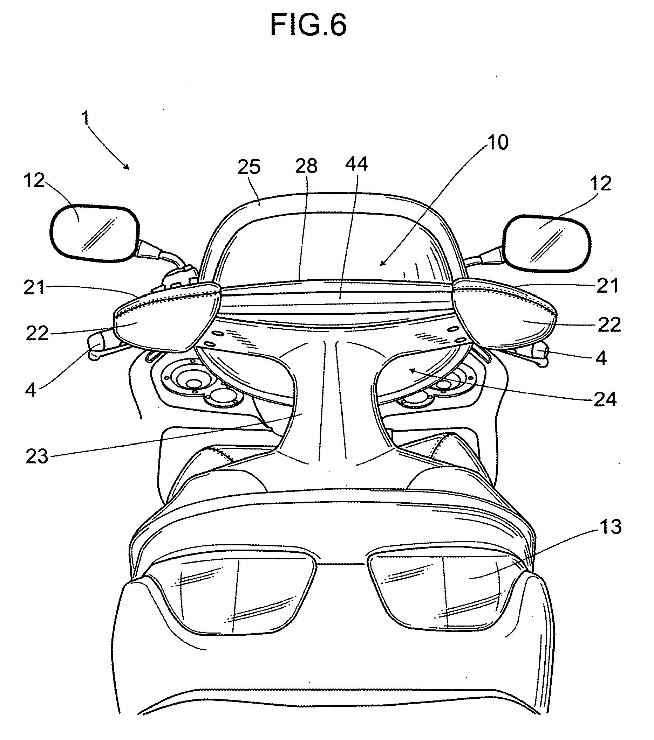

As shown in Fig. 6, the spoiler body 24 is constituted of a member that is letter-T-shaped in a rear view. The rear spoiler 10 is formed such that the dimension of the spoiler body 24 with respect to the width direction of the vehicle 1 is shorter than the total width of the vehicle 1, i.e., the distance between the side mirrors 12. In other words, the rear spoiler 10 is formed such that both ends of the right and left spoiler sections 22 provided in pairs are disposed within the total width of the vehicle 1 as defined by the distance between the side mirrors 12. Incidentally, the high mount stop lamp 44 is provided in the wing section 28 on the rear side of the vehicle 1, arranged linearly between the pair of the spoiler sections 22.

A portion of each spoiler section 22 that protrudes from the backrest 25 toward the front side of the vehicle 1 has a V-shaped profile in a rear view such that it gradually tapers from a top toward a bottom. Furthermore, the portion of each spoiler section 22 that protrudes from the backrest 25 toward the front side of the vehicle 1 is formed thinner at the outside than at the inside, in a rear view.

Next, an action and effect of the above-mentioned structure are explained.

The rear spoiler 10 allows each spoiler section 22 to be retained above the seat unit 8, at a height approximate to the height of the elbows of the passenger sitting on the passenger seat member 8P, thereby ensuring the rectifying of air without being influenced by a turbulent flow generated in the vicinity of the surface of the vehicle 1.

Moreover, the rear spoiler 10 is provided with the arm-resting surfaces 21 on each spoiler section 22 in order to support the elbows of the passenger sitting on the passenger seat member 8P, thereby enabling a sense of stability to be given to the passenger. Besides, each spoiler section 22 is provided with an air-rectifying function and an arm-resting function, thereby achieving the saving of space.

In addition, the arm-resting surface 21 of the rear spoiler 10 is covered with the covering member 36 having cushioning properties, thus enabling the improving of the feel of the arm-resting surface 21 the passenger may have when resting his/her elbow thereon. Moreover, since the covering member 36 is made of artificial leather so as to be able to generate contact resistance, the slippage of the elbow resting on the arm-resting surface 21 can be prevented, thus improving the sense of stability.

Further, the rear spoiler 10 is formed with the concavely curved surface 28A on the front side thereof, while the backrest 25 having a similarly curved surface is allowed to abut to the curved surface 28A, thereby ensuring the vicinity of the waist sitting on the passenger seat member 8P to be retained reliably, thus further improving the sense of stability.

Furthermore, the rear spoiler 10 retains the spoiler sections 22 by the retainer section 23 of one-piece structure, provided in the center of the vehicle 1, thereby enabling the reduction of air resistance.

Moreover, since each spoiler section 22 is formed so that the distal end thereof may protrude forward of the backrest 25, it can rectify airflow with less influence from the turbulent airflow caused by the backrest 25.

Also, the rear spoiler 10 is formed such that the dimension of the spoiler body 24 with respect to the width direction of the vehicle 1 is shorter than the distance between the side mirrors 12, which in turn means that the distance between the side mirrors 12 provides a total width of the vehicle 1, thus enabling a driver or rider to easily capture the sense of the vehicle 1, improving the operational performance thereof.

Still also, the rear spoiler 10 has the window 31 for speakers, providing the speakers 26 thereinside to thereby contain the speakers 26 inside the wing section 28, thus enabling the rear structure of the vehicle 1 to be compactified. Further, assemblability can be improved by providing the speakers 26 in the spoiler body 24.

Also, since the wing section 28 is retained in a position above the seat unit 8 by the retainer section 23, the speakers 26 can be brought closer to the passenger. Accordingly, the rear spoiler 10 ensures the reliable transmission of music even in noisy conditions.
Moreover, since the rear spoiler 10 has the window 31 for speakers provided adjacent to the curve surface 28A in a manner surrounding the backrest 25, it is possible to bring the speakers 26 close to the passengers, thus enabling music or the like to be transmitted efficiently.

Still moreover, since the rear spoiler 10 has the window 31 for speakers open to the top and the vibrator members of said speakers 26 are directed upwardly, acoustic directivity is ensured toward the holes of the helmet of the passenger sitting on the passenger seat member 8P, thereby enabling music or the like to be transmitted efficiently. Alternatively, the helmet may comprise a sound transmitting hole formed through the undersurface of a cap body of the helmet, thus enabling music to be supplied to the passenger more effectively.

Further, since the rear spoiler 10 contains the electric wires 46 for speakers and the electric wires 47 for lamps inside the spoiler body 24, it can improve design properties.

Still further, since the rear spoiler 10 contains the woofer 27 inside the backrest 25, it is possible to accommodate a comparatively wide woofer thereinside, thus enabling powerful low frequency sound to be reproduced.

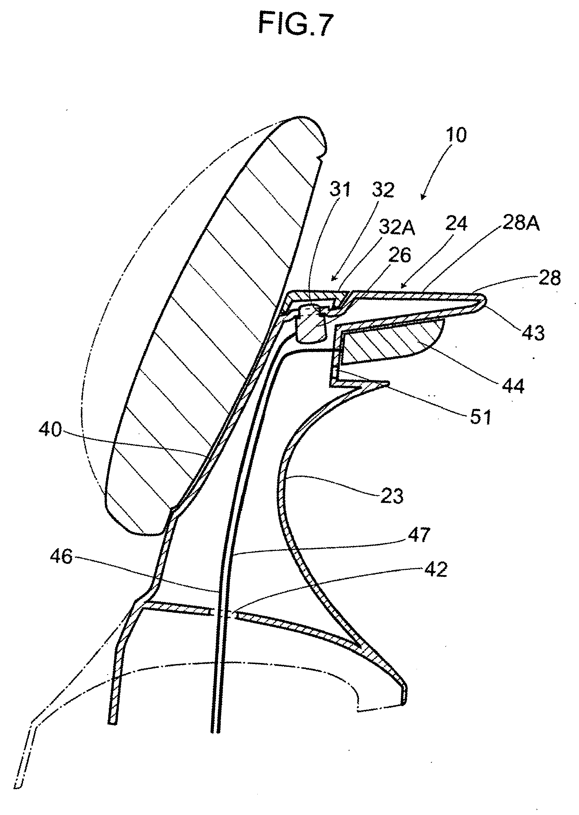

In the meantime, it is to be noted that the rear spoiler 10 includes the high mount stop lamp 44 provided in the wing section 28 located at a higher position than the conventional ones.
The present invention is not limited to the foregoing embodiment, but various modifications are possible within the scope of the present invention. For example, although the foregoing embodiment proposes a case where the retainer section 23 and the wing section 28 are separate from each other in the spoiler body 24 such that they are communicated with each other through the upper communication hole 41 provided in the retainer section 23 and the penetration hole 45 provided in the wing section 28, the present invention is not limited thereto. In an alternative form of the invention, the spoiler body 24 may be formed so as to provide the retainer section 23 and the wing section 28 in a one-piece structure, as shown in Fig. 7.

Still alternatively, as is also shown in Fig. 7, the spoiler body 24 may be provided with a vent hole 51 that is open to the rear side of the vehicle 1, provided below the high mount stop lamp 44. Providing the vent hole 51 on the spoiler body 24 enables sound pressure from the speakers 26 to be released to the exterior.

Due to the vent hole 51 being provided below the high mount stop lamp 44, the spoiler body 24 can prevent rain or dusts from being taken in through the vent hole 51, since the rear vane 43 of the wing section 28 or the high mount stop lamp 44 can serve as a roof.

Although the vehicle 1 is a scooter type motorcycle in the foregoing embodiment, the present invention is not limited thereto, but may be applicable to any saddle-type vehicle, such as three-wheeled or four-wheeled motor vehicle.

Moreover, although the backrest 25 is fixedly provided in the spoiler body 24 in the foregoing embodiment, the present invention is not limited thereto, but the backrest 25 may be removably provided therein. Making the backrest 25 removable enables the backrest 25 to be removed when a passenger does not sit on the passenger seat member 8P, thus reducing the air resistance. The removed backrest 25 may be stored in a storage box provided below the seat unit 8.

Although the covering member 36 is fixedly provided in the spoiler section 22 in the foregoing embodiment, the present invention is not limited thereto, but the covering member 36 may be removably provided in the spoiler section 22. In that case, the removed covering member may be stored in the storage box provided below the seat unit 8.

Although the speakers 26 are provided inside the spoiler body 24 by installing them inside the window 31 for speakers provided in the wing section 28 in the foregoing embodiment, the present invention should not be limited thereto, but the speakers 26 may be provided separately from the spoiler body 24. In that case, it is preferable that the guard member 32 which covers the speakers 26 may be formed flush with the upper surface of the wing section 28.

Although the amplifier is provided in the vehicle 1 in the foregoing embodiment, the present invention should not be limited thereto, but it may be installed inside the spoiler body 24, such as inside the wing section 28 or the retainer section 23 after waterproofing the same.
Although each spoiler section 22 is covered with the covering member 36 in the foregoing embodiment, the present invention should not be limited thereto, but any other suitable portion thereof may be covered therewith. For example, it may cover at least a portion of the spoiler part 22 on which the passenger sitting on the passenger seat member 8P rests his/her elbow, i.e., a portion that projects forward from the backrest 25.

Although the spoiler sections 22 are retained above the seat unit 8 by the single retainer section 23 in the foregoing embodiment, the present invention should not be limited thereto, but they may be supported by two or more retainer sections 23. That is, the retainer section 23 may be provided at right and left sides of the vehicle 1, respectively, and the spoiler section 22 may be provided for each corresponding retainer section 23.

Although the drain opening 42A is provided in the lower part of the spoiler body 24 in the foregoing embodiment, the lower communication hole 42 may be provided to serve as a drain opening as well.

## Claims

1. A saddle-type vehicle (1) with a rear spoiler (10) arranged on a rear side of a seat (8) of the vehicle (1), wherein said spoiler (10) comprises spoiler sections (22) arranged at right and left sides of the saddle-type vehicle (1);
**characterized in that** the rear spoiler comprises
a retainer section (23) for retaining said spoiler sections (22) in a position above a surface of said seat (8); and
an arm-resting surface (21) provided in said spoiler sections (22).

2. The vehicle according to claim 1, **characterized in that** said arm-resting surface (21) is inclined toward a front, and covered with a covering member (36).

3. The vehicle according to claim 1 or 2, **characterized in that** said spoiler sections (22) are retained by the retainer section (23) of a single piece structure, extending vertically from a transverse center of the vehicle (1).

4. The vehicle according to any of claims 1 to 3, **characterized in that** the rear spoiler (10) comprises a curved surface (28A) that is curved concavely with respect to the front side of the vehicle (1), while a backrest (25) having a similarly curved surface is allowed to abut thereto.

5. The vehicle according to claim 4, **characterized in that** said spoiler sections (22) are formed such that a distal end thereof protrudes forward of the backrest (25) toward the front side of the vehicle (1).

6. The vehicle according to any of claims 1 to 5, **characterized in that** the rear spoiler (10) is formed such that the dimension of the spoiler body (24) with respect to the width direction of the vehicle (1) is shorter than a distance between right and left side mirrors (12).

## Patentansprüche

1. Satteltyp-Fahrzeug (1) mit einem Heckspoiler (10), der an einer Rückseite eines Sitzes (8) des Fahrzeugs (1) angeordnet ist, wobei der Spoiler (10) Spoilerabschnitte (22) umfasst, die auf der rechten und linken Seite des Satteltyp-Fahrzeugs (1) angeordnet sind;
**dadurch gekennzeichnet, dass** der Heckspoiler
ein Halteteil (23) zum Halten der Spoilerabschnitte (22) in einer Position oberhalb einer Oberfläche des Sitzes (8); und
eine in den Spoilerabschnitten (22) vorgesehene Armlehnenfläche (21) umfasst.

2. Fahrzeug gemäß Anspruch 1, **dadurch gekennzeichnet, dass** die Armlehnenfläche (21) zu einer Vorderseite hin geneigt und mit einem Abdeckelement (36) bedeckt ist.

3. Fahrzeug gemäß Anspruch 1 oder 2, **dadurch gekennzeichnet, dass** die Spoilerabschnitte (22) durch das Halteteil (23) von einteiliger Struktur, das sich von einem diagonalen Zentrum des Fahrzeugs (1) vertikal erstreckt, gehalten werden.

4. Fahrzeug gemäß einem der Ansprüche 1 bis 3, **dadurch gekennzeichnet, dass** der Heckspoiler (10) eine gekrümmte Oberfläche (28A) aufweist, die in Bezug auf die Vorderseite des Fahrzeugs (1) konkav gekrümmt ist, während eine Rückenlehne (25), die eine ähnlich gekrümmte Oberfläche aufweist, daran anstoßen gelassen wird.

5. Fahrzeug gemäß Anspruch 4, **dadurch gekennzeichnet, dass** die Spoilerabschnitte (22) solcherart geformt sind, dass ein distales Ende davon von der Rückenlehne (25) nach vor zur Vorderseite des Fahrzeugs (1) ragt.

6. Fahrzeug gemäß einem der Ansprüche 1 bis 5, **dadurch gekennzeichnet, dass** der Heckspoiler (10) solcherart geformt sind, dass die Abmessung des Spoilergehäuses (24) bezüglich der Breitenrichtung des Fahrzeugs (1) kürzer als ein Abstand zwischen dem rechten und linken Seitenspiegel (12) ist.

## Revendications

1. Véhicule (1) de type à selle, avec un becquet arrière (10) agencé sur un côté arrière d'un siège (8) du véhicule (1), dans lequel ledit becquet (10) comprend des sections de becquet (22) agencées sur les côtés droit et gauche du véhicule (1) de type à selle ;
**caractérisé en ce que** le becquet arrière comprend :
une section de retenue (23), pour retenir lesdites sections de becquet (22) en une position située au-dessus d'une surface dudit siège (8) ; et
une surface d'accoudement (21), prévue dans lesdites sections de becquet (22).

2. Véhicule selon la revendication 1, **caractérisé en ce que** ladite surface d'accoudement (21) est inclinée vers l'avant et couverte d'un organe de revêtement (36).

3. Véhicule selon la revendication 1 ou 2, **caractérisé en ce que** lesdites sections de becquet (22) sont retenues par la section de retenue (23) présentant une structure d'une seule pièce, s'étendant verticalement en partant d'un centre transversal du véhicule (1).

4. Véhicule selon l'une quelconque des revendications 1 à 3, **caractérisé en ce que** le becquet arrière (10) comprend une surface incurvée (28A), à courbure concave par rapport au côté avant du véhicule (1), tandis qu'un dossier (25), ayant une surface de courbure similaire, est placé en butée avec elle.

5. Véhicule selon la revendication 4, **caractérisé en ce que** lesdites sections de becquet (22) sont formées de manière qu'une extrémité distale de celles-ci fasse saillie à l'avant du dossier (25), vers le côté avant du véhicule (1).

6. Véhicule selon l'une quelconque des revendications 1 à 5, **caractérisé en ce que** le becquet arrière (10) est formé de manière que la dimension du corps de becquet (24), par rapport à la direction de largeur du véhicule (1), est plus petite qu'une distance entre les rétroviseurs (12) de côté droit et gauche.
